# EUROPÄISCHE PATENTANMELDUNG

(11) **EP 0 997 765 A2**
(43) Veröffentlichungstag der Anmeldung: **03.05.2000**
(21) Anmeldenummer: 99440276.6
(22) Anmeldetag: 15.10.1999
(51) Int. Cl.: G02F 1/01, G02F 1/313

(54) **Optischer Wellenleiter-Schalter**

(30) Priorität: 29.10.1998 DE 19849862
(71) Anmelder: ALCATEL, 75008 Paris (FR)
(72) Erfinder: Lösch, Kurt, Dr., 70191 Stuttgart (DE); Keil, Norbert, 13437 Berlin (DE); Weinert, Carl Michael, Dr., 12203 Berlin (DE)
(74) Vertreter: Rausch, Gabriele, Dr.

(57) **Zusammenfassung**

In transparenten optischen Kommunikationssystemen werden optische Raumschalter benötigt, die ankommende optische Signale auf einen von mehreren Ausgängen umzuschalten. Aufgabe der Erfindung ist es, einen optischen Raumschalter anzugeben, der hohe Schaltgeschwindigkeiten ermöglicht, hindurchtretendes Licht möglichst wenig dämpft und überdies kostengünstig und zuverlässig ist.

Erfindungsgemäß sind in einer ersten Ebene mehrere Glaswellenleiter (GWL1...GWL4) angeordnet. In einer darüberliegenden Ebene befindet sich wenigstens ein Polymerwellenleiter (PWLA), der mit den Glaswellenleitern einen spitzen Winkel einschließt. Dort, wo der Polymerwellenleiter die darunterliegenden Glaswellenleiter kreuzt, entstehen vertikale Koppelbereiche. Mit Hilfe von Heizelektroden (EA1...EA4; EB1...EB4) sind die Koppeleigenschaften gezielt beeinflußbar. Um Licht von einem Glaswellenleiter in einen anderen Glaswellenleiter umzuschalten, stellt man die Temperatur der vertikalen Koppelbereiche so ein, daß Licht von dem einen Glaswellenleiter in den Polymerwellenleiter hinaufkoppelt, dort geführt wird und in einem anderen Koppelbereich in den gewünschten Glaswellenleiter hinunterkoppelt.

## Beschreibung

Die Erfindung betrifft einen optischen Raumschalter nach dem Oberbegriff des Anspruchs 1.

Bei den derzeit verwendeten optischen Kommunikationsnetzen werden Nachrichten über optische Fasern übertragen, während die Vermittlung der Nachrichten an den Netzknoten nach wie vor auf elektrischem Wege erfolgt. Die als optische Signale eintreffenden Nachrichten werden hierzu von geeigneten Wandlern in elektrische Signale umgesetzt, elektrisch vermittelt und anschließend wieder in optische Signale zurückgewandelt.

Bei zukünftigen optischen Kommunikationsnetzen soll auch die Vermittlung auf optischem Wege erfolgen. Man spricht in diesem Zusammenhang häufig von "transparenten" optischen Kommunikationsnetzen, da die Nachricht vom Sender bis zum Empfänger durchweg als Lichtsignal übertragen wird. Eine besondere Bedeutung kommt in solchen Kommunikationsnetzen optischen Raumschaltern zu. Sie haben die Aufgabe, ankommende optische Signale auf einen von mehreren Ausgängen umzuschalten. Von optischen Raumschaltern wird verlangt, daß sie hohe Schaltgeschwindigkeiten ermöglichen, hindurchtretendes Licht möglichst wenig dämpfen und überdies kostengünstig und zuverlässig sind.

Für optische Raumschalter sind eine Anzahl verschiedener Konzepte entwickelt worden. So ist beispielsweise aus der EP-B 1-0 494 768 ein optischer Raumschalter bekannt, bei dem sich in einer Ebene eine Vielzahl von optischen Wellenleitern rechtwinklig kreuzen. Die Kreuzungsstellen sind mit einer Nut versehen, die diagonal zu den optischen Wellenleitern verläuft. In diese Nut kann von einem Roboter ein Öl eingefüllt und wieder abgesaugt werden. Je nachdem, ob sich Öl in der Nut befindet oder nicht, geht ein Lichtstrahl durch den Kreuzungspunkt hindurch oder wird seitlich in den kreuzenden Wellenleiter hinein abgelenkt. Bei diesem bekannten Raumschalter lassen sich sehr großflächige Schaltmatrizen realisieren; nachteilig ist hingegen, daß die Schaltgeschwindigkeiten aufgrund der erforderlichen Roboterbewegungen recht niedrig sind.

Ein anderer Ansatz für einen optischen Raumschalter ist bekannt aus einem Aufsatz von N. Keil et al. mit dem Titel *Polymer waveguide optical switch with <-40 dB polarisation independent crosstalk,* Electronic Letters, 28th March 1996, Vol. 32, No. 7, Seiten 655 - 657. Der dort beschriebene Raumschalter beruht auf dem Prinzip des optischen Richtkopplers. Bei Richtkopplern sind zwei in einer Ebene angeordnete optische Wellenleiter über eine Koppellänge L hinweg in engem Abstand nebeneinander geführt. Wesentlich an dem dort vorgestellten Ansatz ist, daß die optischen Wellenleiter aus einem Polymer bestehen, welches einen wesentlich ausgeprägteren thermooptischen Effekt als beispielsweise Glas zeigt. Dies bedeutet, daß sich bereits geringe Temperaturänderungen stark auf die Brechzahl des Polymers auswirken. Mit Hilfe im Bereich der Koppellänge angeordneten Heizelektroden läßt sich nun die Temperatur der beiden optischen Wellenleiter und damit deren Brechzahl getrennt steuern. Auf diese Weise kann man die effektive Koppellänge so einstellen, daß in einem Wellenleiter geführtes Licht entweder in diesem Wellenleiter bleibt (Geradeausstellung) oder in den benachbarten Wellenleiter überkoppelt (Kreuzstellung). Raumschalter höherer Ordnung (z. B. 4x4 Schalter) erhält man durch Kaskadicren von mehreren derartigen 2x2 Raumschaltern. Nachteilig ist hierbei jedoch, daß Licht in diesem Raumschalter ausschließlich in Polymerwellenleitern geführt wird, die zwar günstige thermooptische Eigenschaften haben, aber Licht der üblicherweise verwendeten Wellenlängen relativ stark dämpfen.

Es ist daher Aufgabe der Erfindung, einen optischen Raumschalter anzugeben, der hohe Schaltgeschwindigkeiten ermöglicht, hindurchtretendes Licht möglichst wenig dämpft und einfach herstellbar ist.

Ein erfindungsgemäßer optischer Raumschalter ist Gegenstand des Anspruchs 1. In einer ersten Ebene sind eine Anzahl von Glaswellenleitern angeordnet. In einer darüberliegenden Ebene befindet sich wenigstens ein Polymerwellenleiter, der mit den Glaswellenleiter einen spitzen Winkel einschließt. Dort, wo der Polymerwellenleiter die darunterliegenden Glaswellenleiter kreuzt, entstehen vertikale Koppelbereiche. Die Koppeleigenschaften in diesen Bereichen lassen sich beeinflussen, indem dort die Temperatur des Polymerwellenleiterkerns verändert wird. Zu diesem Zweck sind oben auf dem Raumschalter Heizelektroden aufgebracht. Soll Licht von einem Glaswellenleiter in einen anderen Glaswellenleiter umgeschaltet werden, so stellt man die Temperatur der vertikalen Koppelbereiche so ein, daß Licht von dem einen Glaswellenleiter in den Polymerwellenleiter hinaufkoppelt, dort geführt wird und in einem anderen Koppelbereich in den gewünschten Glaswellenleiter hinunterkoppelt.

Der erfindungsgemäße Raumschalter vereint die folgenden Vorteile:
a) Da der thermooptische Effekt in Polymeren sehr ausgeprägt ist, sind nur geringe Schaltleistungen erforderlich. Entsprechend gering ist die abzuführende Wärmemenge.
b) Durch die erfindungsgemäße Kombination von Glas- und Polymerwellenleitern ist die Dämpfung des Raumschalters sehr gering. Dies ist vor allem auf zwei Gründe zurückzuführen:
   i) Licht wird überwiegend in Glaswellenleitern geführt, die in den für die optische Kommunikation verwendeten Wellenlängenbereichen eine sehr geringe Dämpfung haben. In den Polymerwellenleitern, in denen die Dämpfung höher ist, wird das Licht nur über eine kurze Strecke geführt.
   ii) Bei bekannten, auf dem Prinzip der Richtkoppler basierenden Raumschaltern befindet sich der Koppelbereich in einer Ebene. Der Koppelbereich ist der Abschnitt, in dem die zwei optischen Wellenleiter einen so kleinen Abstand zueinander haben, daß ein Überkoppeln möglich ist. Diese Engführung erfordert zwangsläufig, daß die optischen Wellenleiter gekrümmte Abschnitte haben. Krümmungen wirken sich jedoch nachteilig auf die Eigenschaften der Wellenleitung aus, da entweder Lichtverluste auftreten oder aber durch Einstellen einer höheren Brechzahldifferenz zwischen Wellenleiterkern und Wellenleitermantel der Wellenleiterquerschnitt verkleinert werden muß. Ein verkleinerter Wellenleiterquerschnitt führt jedoch zu Fehlanpassungen der Modenfelder bei der Kopplung des Wellenleiter an eine optische Faser, wodurch sich die Dämpfungseigenschaften des Raumschalters verschlechtern. Der erfindungsgemäße Raumschalter hingegen läßt sich auch ohne gekrümmte Abschnitte realisieren, da sich dort der Polymerwellenleiter und die Glaswellenleiter in zwei unterschiedlichen Ebenen kreuzen.
c) Es werden keine teuren Materialien wie beispielsweise Lithiumniobat, Galliumarsenid oder Indiumphosphid benötigt, auf deren Basis viele bekannte Raumschalter aufgebaut sind.

Die Begriffe Glas- bzw. Polymerwellenleiter beziehen sich hierbei lediglich auf die entsprechenden Wellenleiterkerne. Ein Glaswellenleiter ist also ein optischer Wellenleiter, dessen Wellenleiterkern aus Glas besteht. Entsprechendes gilt für den wenigstens einen Polymerwellenleiter. Für das Funktionieren des erfindungsgemäßen Raumschalters ist es grundsätzlich gleichgültig, aus welchem Material jeweils die Wellenleitermantelschichten bestehen. Es ist lediglich sicherzustellen, daß auch hier die für die optische Wellenleitung erforderliche Brechzahldifferenz zwischen Wellenleiterkern und Wellenleitermantel eingehalten wird.

Bei einem vorteilhaften Ausführungsbeispiel der Erfindung ist zwischen den Wellenleiterkernen der wenigstens zwei Glaswellenleiter und dem Wellenleiterkern des wenigstens einen Polymerwellenleiters eine Polymerschicht. Bei einer solchen Anordnung wird ausgenutzt, daß Polymere nur eine vergleichsweise geringe Wärmeleitfähigkeit haben. Der Wellenleiterkern des Polymerwellenleiters ist damit thermisch gut von den darunter liegenden Glasschichten isoliert. Somit fließt nur ein geringer Teil der von der Heizelektrode erzeugten Wärme ungenutzt in Richtung der Glaswellenleiter ab.

Bei dem erfindungsgemäßen Raumschalter sind die Brechzahlen der Glaswellenleiter und des wenigstens einen Polymerwellenleiters sehr genau einzustellen. Diese Einstellung kann dadurch unterstützt werden, indem man Mittel zur Temperaturregelung des gesamten optischen Raumschalters vorsieht. Diese können beispielsweise als regelbares Heizelement ausgeführt sein, auf dem ein den optischen Raumschalter tragendes Substrat aufgebracht wird. Da sich, wie oben bereits erwähnt, der thermooptische Effekt von Glas und von Polymeren unterscheidet, kann durch Temperaturveränderung der gesamten Anordnung die Differenz zwischen den jeweiligen Brechzahlen genau eingestellt werden. Die Anordnung ist damit weniger empfindlich gegenüber Herstellungstoleranzen.

Bei einem anderen vorteilhaften Ausführungsbeispiel der Erfindung kreuzt in den Koppelbereichen der wenigstens eine Polymerwellenleiter so die wenigstens zwei Glaswellenleitern, daß mit diesen ein Winkel zwischen 0.2° und 1.2° eingeschlossen wird. Es hat sich gezeigt, daß bei diesen Werten besonders günstige Schalteigenschaften, insbesondere geringes Nebensprechen, erreichbar sind.

Bei einem noch anderen Ausführungsbeispiel ist der wenigstens eine Polymerwellenleiter zwischen den Koppelbereichen s-förmig gekrümmt. Dadurch läßt sich der Platzbedarf des Raumschalters erheblich reduzieren. Die Verschlechterung der Wellenleitungseigenschaften ist hierbei tragbar, solange die Krümmungen nicht zu stark sind.

Die Erfindung wird nachfolgend anhand der Ausführungsbeispiele und der Zeichnungen eingehend erläutert. Es zeigen:
Fig. 1 : Aufsicht auf einen erfindungsgemäßen 1x2 Raumschalter (nicht maßstäblich);
Fig. 2: Seitlicher Schnitt durch den erfindungsgemäßen 1x2 Raumschalter aus Fig. 1 (nicht maßstäblich);
Fig. 3: Seitlicher Schnitt durch eine Variante des erfindungsgemäßen Raumschalters (Ausschnitt);
Fig. 4: Seitlicher Schnitt durch eine andere Variante des erfindungsgemäßen Raumschalters (Ausschnitt);
Fig. 5: Seitlicher Schnitt durch eine weitere Variante der erfindungsgemäßen Raumschalters (Ausschnitt);
Fig. 6: Diagramm zur Erläuterung des Koppelverhaltens eines Koppelbereichs, der sich im Geradeauszustand befindet;
Fig. 7: Diagramm zur Erläuterung des Koppelverhaltens eines Koppelbereichs, der sich im Kreuzzustand befindet;
Fig. 8: Perspektivische Darstellung eines erfindungsgemäßen 4x4 Raumschalters (nicht maßstäblich);
Fig. 9: Aufsicht auf einen erfindungsgemäßen 4x4 Raumschalter mit Anschlußstellen für optische Fasern;
Fig. 10: Schematische Darstellung eines anderen Ausführungsbeispiels, bei dem der Polymerwellenleiter zwischen den Koppelbereichen gekrümmt ist.

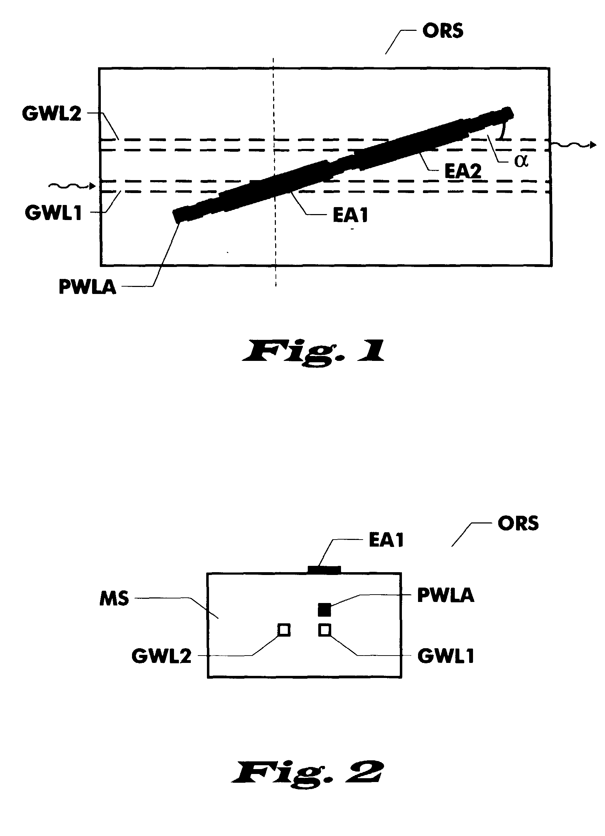

Anhand der Fig. 1 und Fig. 2 wird nachfolgend ein erstes Ausführungsbeispiel eines erfindungsgemäßen Raumschalter ORS erläutert. Fig. 1 zeigt eine Aufsicht, während Fig. 2 einen seitlichen Schnitt durch die in Fig. 1 gestrichelt gekennzeichnete Ebene darstellt. In Fig. 2 sind zwei optische Wellenleiter GWL1 und GWL2 zu erkennen, die gebildet werden von Wellenleiterkernen und von einer diese Kerne umgebenden Mantelschicht MS. Die Wellenleiterkerne sind nicht durch eigene Bezugszeichen gekennzeichnet; statt dessen zeigen die Bezugszeichen für optischen Wellenleiter in den Zeichnungen grundsätzlich auf deren Kerne, da diese die geometrische Form der optischen Wellenleiter bestimmen.

Die Kerne der optischen Wellenleiter GWL1 und GWL2 bestehen aus Glas, weswegen diese optischen Wellenleiter im folgenden kurz als Glaswellenleiter bezeichnet werden. Das Glas kann zur gezielten Veränderung der Brechzahl ggf. Zusatzstoffe wie Germanium oder Phosphor enthalten. Die Verwendung einer bestimmten Glasart ist für die Ausführung der Erfindung nicht erforderlich.

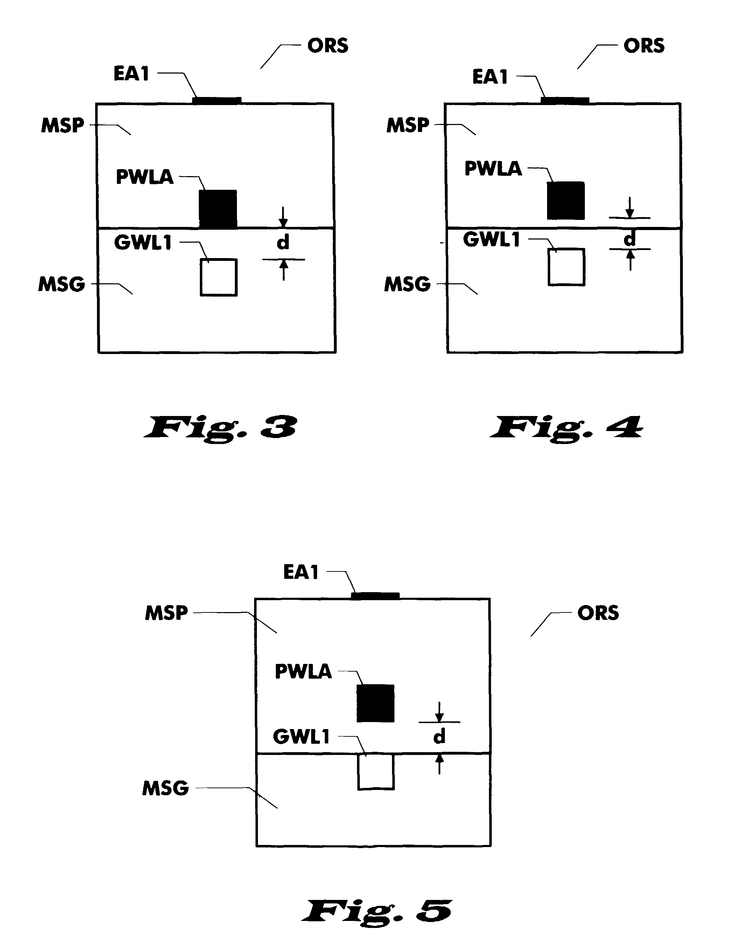

Um eine Lichtführung in den Glaswellenleitern GWL1 und GWL2 zu gewährleisten, muß die Brechzahl der Mantelschicht MS niedriger sein als die der Kerne der Glaswellenleiter GWL1 und GWL2. Andere Voraussetzungen werden an die Materialeigenschaften der Mantelschichten MSG und MSP grundsätzlich nicht gestellt. Im Zusammenhang mit dem Fig. 3, 4 und 5 wird weiter unten beschrieben, wie die Mantelschicht im einzelnen aufgebaut sein kann.

In Fig. 2 ist erkennbar, daß die Kerne der Glaswellenleiter GWL1 und GWL2 einen rechteckigen Querschnitt haben. Denkbar sind grundsätzlich auch andere Querschnittsformen, z. B. oval. Da die Glaswellenleiter GWL1 und GWL2 in einer Ebene angeordnet sind, spricht man auch von planaren optischen Wellenleitern.

In Fig. 2 ist ferner ein Wellenleiter PWLA zu erkennen. Der Kern dieses Wellenleiters PWLA besteht aus einem Polymer, weswegen er im folgenden als Polymerwellenleiter bezeichnet wird. Als Polymer kommen hierbei beispielsweise Polymethylmethacrylat (PMMA) oder Benzocyclobuten (BCB) in Frage. Im dargestellten Ausführungsbeispiel ist der Kern des Polymerwellenleiters PWLA in die gleiche Mantelschicht MS eingebettet wie die Kerne der Glaswellenleiter GWL1 und GWL2. Auch hier ist lediglich sicherzustellen, daß die Mantelschicht MS eine niedrigere Brechzahl hat als der Kern des Polymerwellenleiters PWLA.

Der Polymerwellenleiter PWLA ist in einer Ebene angeordnet, die parallel ist zur der durch die Glaswellenleiter GWL1 und GWL2 definierte Ebene. In Fig. 2 verläuft der Polymerwellenleiter PWLA also über die Glaswellenleiter GWL1 und GWL2 hinweg. Wesentlich für die Erfindung ist hierbei, daß der Polymerwellenleiter PWLA, wie in Fig. 1 gut zu erkennen ist, schräg zu den Glaswellenleitern GWL1 und GWL2 angeordnet ist. Dadurch entstehen an den Stellen, an denen der Polymerwellenleiter PWLA die Glaswellenleiter GWL1 und GWL2 jeweils kreuzt, vertikale Koppelbereiche. Der Winkel zwischen dem Polymerwellenleiter PWLA und den Glaswellenleitern GWL1 und GWL2 ist in Fig. 1 mit α bezeichnet.

Der Schnitt, der in Fig. 2 gezeigt ist, verläuft durch einen der beiden Koppelbereiche, die der Polymerwellenleiter PWLA mit den Glaswellenleitern GWL1 und GWL2 im dargestellten Ausführungsbeispiel bildet. In dem Koppelbereich kommt der Polymerwellenleiter PWLA dem Glaswellenleiter GWL1 so nahe, daß, sofern die geometrischen Abmessungen des Koppelbereichs und die Brechzahlen der Wellenleiter geeignet gewählt sind, Licht vom Glaswellenleiter GWL1 in den Polymerwellenleiter PWLA vollständig überkoppeln kann. Bei dem dargestellten Ausführungsbeispiel ist diese Wahl so getroffen, daß im Glaswellenleiter GWL1 geführtes Licht diesen im Koppelbereich nur teilweise verläßt und der ausgekoppelte Teil über die Länge des Koppelbereichs wieder vollständig in den Glaswellenleiter GLW1 zurückkoppelt. Letztlich bleibt also das gesamte Licht im Glaswellenleiter GWL1. Der Koppelbereich befindet sich somit in Geradeausstellung.

Erfindungsgemäß sind außerdem Mittel vorgesehen, mit denen in den Koppelbereichen die Temperatur des Wellenleiterkerns des Polymerwellenleiters veränderbar ist. Bei dem dargestellten Ausführungsbeispiel sind diese Mittel als metallische Heizelektroden EA1 und EA2 ausgeführt, die auf der Oberseite des optischen Raumschalters angeordnet sind. Die genaue Geometrie spielt in diesem Zusammenhang nur eine untergeordnete Rolle; es muß lediglich gewährleistet sein, daß in den Koppelbereichen die Temperatur erhöht werden kann. Alternativ zu den Heizelektroden können im Prinzip auch Kühlelemente vorgesehen sein, z. B. in der Art von Poltier-Kühlern.

Wesentlich ist allein, daß in den Koppelbereichen die Temperatur der Polymerwellenleiterkerne gezielt veränderbar ist. Es ist dann möglich, durch eine Temperaturveränderung über den thermooptischen Effekt die Koppeleigenschaften des jeweiligen Koppelbereichs zu verändern.

Bei dem dargestellten Ausführungsbeispiel sind die geometrischen Abmessungen des Koppelbereichs und die Brechzahlen der Wellenleiter so gewählt, daß bei einer geringfügigen Temperaturerhöhung des Polymerwellenleiters PWLA dessen Kern die gleiche Brechzahl hat wie der Kern des Glaswellenleiters. Im Glaswellenleiter GWL1 geführtes Licht koppelt dann vollständig hinüber in den Polymerwellenleiter PWLA. Wenn bei dem anderen Koppelbereich die gleichen Verhältnisse herrschen, koppelt das Licht dort hinunter in den Glaswellenleiter GWL2. Dieser Lichtweg ist in Fig. 1 durch zwei Pfeile zu beiden Seiten des Raumschalters angedeutet. Auf diese Weise läßt sich über den Heizstrom, der der Heizelektrode EA1 zugeführt wird, ein im Glaswellenleiter GWL1 geführter Lichtstrahl auf einen von zwei Ausgängen umschalten.

Wenn Licht lediglich zwischen den beiden Ausgängen umgeschaltet werden soll, ist bei diesem Ausführungsbeispiel keine zweite Heizelektrode EA2 notwendig. Diese ist bei diesem einfachen 1x2 Raumschalter nur dann erforderlich, wenn der Raumschalter auch die Funktion haben soll, einen Lichtstrahl auszulöschen. Dies läßt sich erreichen, wenn der erste, durch die Heizelektrode EA1 beeinflußbare Koppelbereich in Kreuzstellung ist und der andere Koppelbereich in Geradeausstellung. Das im Polymerwellenleiter PWLA geführte Licht gelangt dann bis an dessen Ende und wird dort, sofern dieses Ende entsprechend ausgeführt ist (Taper etc.), in die Mantelschicht abgestrahlt.

In der Regel wird man die Unterseite der Mantelschicht MS auf einen Träger (nicht dargestellt) aufbringen, bei dem es sich beispielsweise um ein Silizium-Kristall oder einer Keramik handeln kann. Möglich ist jedoch auch, die die Heizelektroden EA1 und EA2 tragende Seite der Mantelschicht MS mit einem Träger zu verbinden. Für die Erfindung ist dies nicht wesentlich.

Die Fig. 3, 4 und 5 zeigen in seitlichen Schnitten weitere Ausführungsbeispiele der Erfindung, bei denen die Mantelschicht unterteilt ist in zwei Teilmantelschichten MSG und MSP. Die Mantelschicht MSG besteht aus Glas, die Mantelschicht MSP aus einem Polymer. Aus Gründen der Übersicht ist nur ein Glaswellenleiter GWL1 dargestellt. Bei allen dargestellten Varianten ist der vertikale Abstand d zwischen dem Glaswellenleiter GWL1 und dem Polymerwellenleiter PWLA identisch.

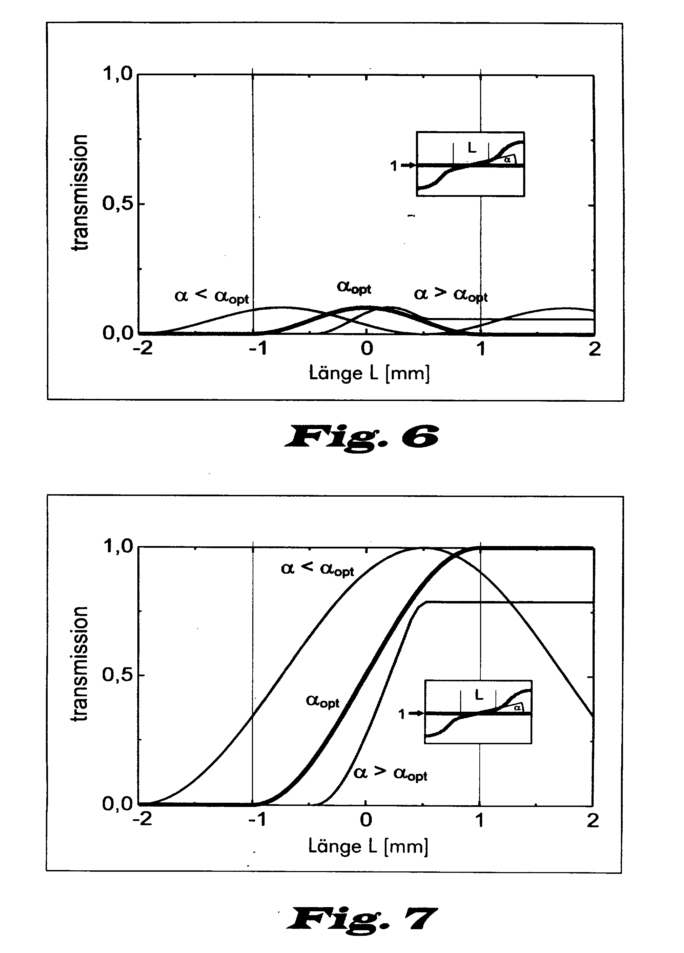

Bei der in Fig. 3 gezeigten Variante ist der Glaswellenleiter GWL1 vollständig von der Glasmantelschicht MSG umgeben. Der Kern des Polymerwellenleiters PWLA grenzt auf seiner Unterseite unmittelbar an die Glasmantelschicht MSG an. Die übrigen Begrenzungsflächen des Kerns sind von der Polymermantelschicht umgeben. Bei der in Fig. 4 gezeigten Variante sind sowohl der Glaswellenleiter GWLI als auch der Polymerwellenleiter PWLA von allen Seiten vollständig von der Glasmantelschicht bzw. von der Polymermantelschicht umgeben. Die in Fig. 5 gezeigte Variante stellt gewissermaßen das Gegenstück zu der in Fig. 3 dargestellten Variante dar. Hier ist der Kern des Polymerwellenleiters PWLA vollständig von einer Polymermantelschicht MSP umgeben. Der Kern des Glaswellenleiters GWL1 grenzt mit seiner Oberseite an die Polymermantelschicht MSP an; die übrigen Begrenzungsflächen des Kerns sind von der Glasmantelschicht umgeben.

Welcher der Varianten im Einzelfall der Vorzug zu geben ist, hängt u. a. von den Herstellungsverfahren ab, die zur Anwendung kommen sollen. Allerdings führt der direkte Kontakt zwischen dem Kern des Polymerwellenleiters PWLA und der Glasmantelschicht MSG dazu, daß Wärme, die von der Heizelektrode EA1 erzeugt und in den Kern gelangt ist, unerwünscht durch die thermisch vergleichsweise gut leitende Glasmantelschicht MSG abgeleitet wird. Bei den in Fig. 4 und 5 dargestellten Varianten hingegen ist zwischen dem Polymer- und dem Glaswellenleiter eine Polymerschicht, die die beiden Wellenleiter thermisch voneinander isoliert. Als Folge davon kann ein so aufgebauter Raumschalter mit geringeren Heizströmen betrieben werden.

Anhand der in den Fig. 6 und 7 dargestellten Diagramme sollen nachfolgend einige funktionelle Aspekte der Erfindung näher erläutert werden. Modellrechnungen zeigen, daß das Koppelverhalten vor allem von folgenden Parametern abhängt:
a) Dem Abstand d in vertikaler Richtung zwischen dem Glaswellenleiters GWL1 und dem Polymerwellenleiter PWLA;
b) Der Brechzahl der Mantelschichten;
c) Dem Winkel α, den der Polymerwellenleiter zum Glaswellenleiter im Koppelbereich einnimmt.
d) Der Brechzahldifferenz An zwischen den Kernen der Glaswellenleiter einerseits und des Polymerwellenleiters andererseits.

Bei einem Ausführungsbeispiel der Erfindung wird eine geringe Brechzahldifferenz Δn (Größenordnung: 1 · 10⁻³) eingestellt, die erst verschwindet, wenn die Temperatur des Polymerwellenleiterkerns mit Hilfe eines Heizelements erhöht wird. Je niedriger die Brechzahldifferenz Δn ist, desto weniger Wärme muß zugeführt werden, um die Brechzahldifferenz verschwinden zu lassen, und desto höher sind die erreichbaren Schaltgeschwindigkeiten. Die Fig. 6 und 7 zeigen, wie sich die Transmission des Glaswellenleiters GWL1 über die Länge L des Koppelbereichs ändert. Es sind jeweils drei Kurven angegeben, die die Ergebnisse für unterschiedliche Winkel α repräsentieren. Die anderen oben aufgeführten Parameter sind in allen dargestellten Fällen gleich.

In Fig. 6 ist angenommen, daß die Kerne des Glas- und des Polymerwellenleiters die gleiche Temperatur haben. Das entspricht einer Brechzahldifferenz Δn ≠ 0. Bei einem optimal gewählten Winkel αₒₚₜ koppelt über die Koppellänge L ein Teil des Lichts in den Polymerwellenleiter PWLA hinein und wieder vollständig zurück (Geradeausstellung). Wird der Winkel nicht optimal gewählt, so koppelt das Licht nicht mehr vollständig zurück in den Glaswellenleiter GWL1.

In Fig. 7 ist angenommen, daß der Kern des Polymerwellenleiters PWLA eine höhere Temperatur hat als der Kern des Glaswellenleiters GWL1. Die Temperatur ist gerade um soviel höher, daß die Brechzahldifferenz Δn verschwindet. Wenn der Winkel α optimal gewählt ist, koppelt das gesamte im Glaswellenleiters GWL1 geführte Licht in den Polymerwellenleiter PWLA über (Kreuzstellung). Wird der Winkel nicht optimal gewählt, so koppelt das Licht entweder teilweise wieder zurück oder es koppelt überhaupt nicht vollständig in den Polymerwellenleiter PWLA über.

Der optimale Winkel αₒₚₜ ist allerdings i. A. in beiden Fällen verschieden. Da αₒₚₜ von den anderen angesprochenen Parametern abhängt, läßt sich jedoch mit Hilfe von Modellrechnungen oder empirisch ein Winkel finden, der sowohl bei Geradeaus- als auch bei Kreuzstellung optimales Koppelverhalten ermöglicht. Das in den Fig. 6 und 7 dargestellte optimale Transmissionsverhalten in den beiden Schaltzuständen läßt sich also nur für eine optimierte Kombination der erwähnten Parameter erreichen. Modellrechnungen haben gezeigt, daß bei verschiedenen Parametersätzen der optimale Winkel αₒₚₜ zwischen 0.2° und 1.2° liegt.

Weicht im unbeheizten Zustand (Geradeausstellung) die tatsächliche Brechzahldifferenz Δn von ihrem Sollwert ab, so koppelt ein Teil des Lichts dauerhaft in den Polymerwellenleiter über, was sich aus nachrichtentechnischer Sicht als Nebensprechen bemerkbar macht. Daher ist der Einhaltung der optimalen Brechzahldifferenz Δn besondere Aufmerksamkeit zu widmen. Die Modellrechnungen zeigen, daß die einzuhaltenden Toleranzen durchaus in der Größenordnung von 5·10⁻⁴ liegen können. Derart enge Toleranzen lassen sich durch eine sehr sorgfältige Materialauswahl und - behandlung erreichen.

Bei einer anderen Möglichkeit, die optimale Brechzahldifferenz Δn einzustellen, sind erfindungsgemäß Mittel zur Temperaturregelung des gesamten optischen Raumschalters vorgesehen. Dabei wird ausgenutzt, daß der thermooptische Effekt in Glas und Polymeren unterschiedlich stark ist und zudem entgegengesetzt verläuft. Durch Regeln der Temperatur des Raumschalters kann somit direkt die optimale Brechzahldifferenz Δn eingestellt werden. Denkbar ist beispielsweise, den Raumschalter zu diesem Zweck auf ein Heizelement aufzubringen, welches eine gleichmäßige Erwärmung des Raumschalters gewährleistet. Auch die Unterbringung des Raumschalters in einem beheizbaren Gehäuse ist möglich.

Es sei an dieser Stelle jedoch darauf hingewiesen, daß sich die beiden Schaltzustände in den Koppelbereichen auch auf andere Weise realisieren lassen. Die angesprochenen Parameter können auch so ausgelegt werden, daß ein Koppelbereich den Kreuzzustand im unbeheizten und den Geradeauszustand im beheizten Zustand einnimmt.

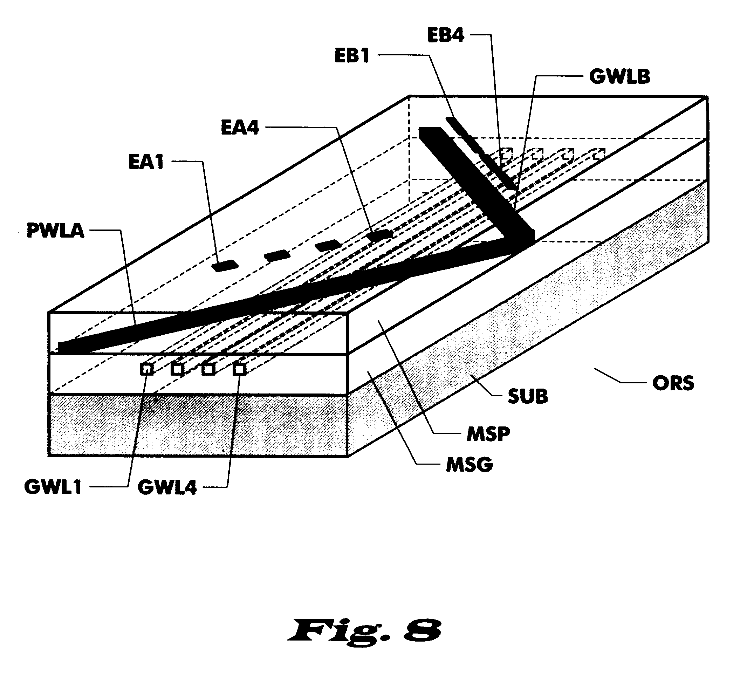

Fig. 8 zeigt eine perspektivische Darstellung eines 4x4 Raumschalters. Auf einem als Träger dienenden Substrat SUB ist eine Glasmantelschicht MSG aufgebracht, in der vier Glaswellenleiterkerne Glaswellenleiter GWL1...GWL4 bilden. Über der Glasmantelschicht GMS befindet sich eine Polymermantelschicht MSP, in die ein Polymerwellenleiter PWLA eingebettet ist. Der Polymerwellenleiter PWLA ist so geformt, daß jeder Glaswellenleiter GWL1...GWL4 einmal im Winkel α und einmal in dessen Komplementärwinkel gekreuzt wird. Die Kreuzungswinkel sind in Fig. 8 jedoch stark übertrieben dargestellt. Durch die Überlappung der Wellenleiter in vertikaler Richtung entstehen 2 x 4 = 8 Koppelbereiche. Diese sind mit Hilfe von Heizelementen EA1...EA4 und EB1...EB4, die auf der Polymermantelschicht MSP aufgebracht sind, unabhängig voneinander schaltbar. Wie anhand der Fig. 7 leicht nachvollziehbar ist, läßt sich mit diesem Raumschalter bidirektional Licht von jedem Glaswellenleiter GWL1...GWL4 in jeden beliebigen anderen Glaswellenleiter GWL1...GWL4 umschalten. Wenn in den Glaswellenleitern GWL1...GWL4 Licht unterschiedlicher, aber eng benachbarter Wellenlänge geführt wird (Wellenlängen-Multiplexen), so kann dieses Licht auch gemeinsam im Polymerwellenleiter PWLA geführt werden, ohne daß es zu gravierenden Störungen kommt. Bei dieser Anordnung sind alle optischen Wellenleiter gerade, so daß es nicht zu Verlusten durch Wellenleiterkrümmungen kommt.

Fig. 9 zeigt eine Möglichkeit, wie die Glaswellenleiter GWL1...GWL4 an optische Fasern angeschlossen werden können. Abseits des eigentlichen Schaltbereichs sind die Glaswellenleiter GWL1...GWL4 schwach gekrümmt, um auf diese Weise einen größeren Abstand zwischen den Anschlußstellen zu ermöglichen. Die Anschlußstellen sind als V-Nuten VNUT ausgeführt, in die optische Fasern einlegbar sind. Im Gegensatz zum Ausführungsbeispiel in Fig. 8 ist der dort dargestellte geknickte Polymerwellenleiter PWLA hier durch zwei einzelne gerade Polymerwellenleiter PWLA und PWLB ersetzt.

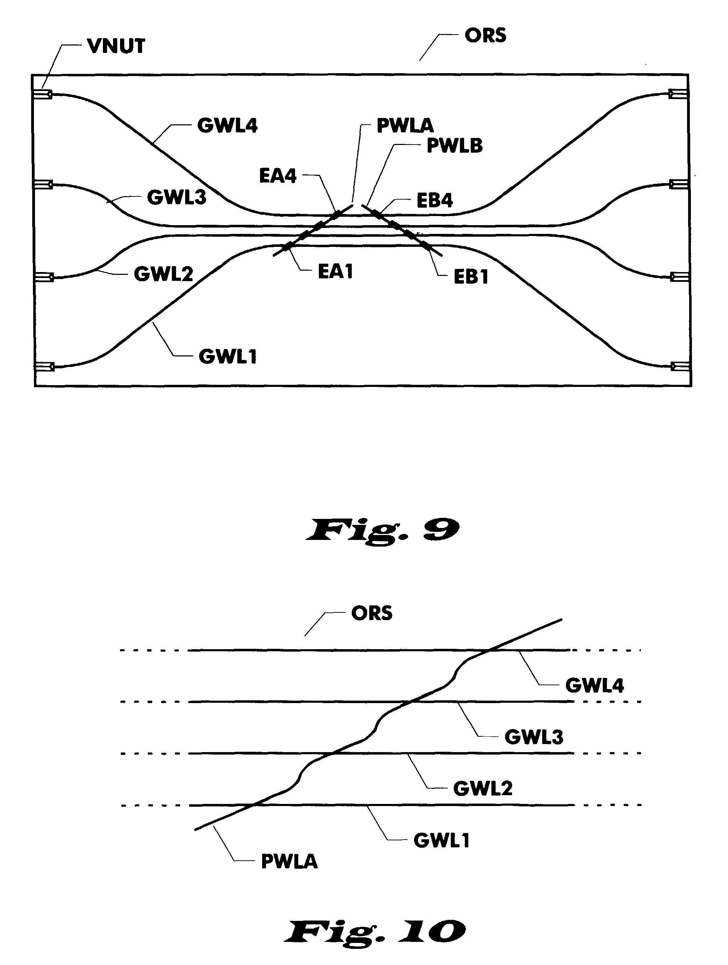

Bei dem in Fig. 10 - nicht maßstäblich - dargestellten Ausführungsbeispiel ist der Polymerwellenleiter PWLA nicht durchweg, sondern nur in den Koppelbereichen gerade. Dazwischen ist der Polymerwellenleiter PWLA s-förmig gekrümmt. Auf diese Weise läßt sich der Platzbedarf des optischen Raumschalters reduzieren. Erkauft wird diese Platzersparnis jedoch in der Regel mit Lichtverlusten, die durch die Krümmungen entstehen. Die Heizelektroden sind hier der Übersichtlichkeit halber nicht dargestellt.

Bei der Herstellung eines erfindungsgemäßen Raumschaltes kann durchweg auf bekannte Verfahren zur Herstellung von Glas- und Polymerwellenleitern zurückgegriffen werden. In diesem Zusammenhang wird nochmals auf die o. a. Veröffentlichung von N. Keil verwiesen, in der weitere Literaturstellen angegeben sind.

## Patentansprüche

1. Optischer Raumschalter (ORS), umfassend
a) wenigstens zwei planare optische Glaswellenleiter (GWL1...GWL4),
i) bei denen wenigstens der Wellenleiterkern jeweils aus Glas besteht und
ii) die in einer Ebene angeordnet sind,
**dadurch gekennzeichnet**,
b) daß wenigstens ein planarer optischer Polymerwellenleiter (PWLA, PWLB) vorgesehen ist,
i) bei dem wenigstens der Wellenleiterkern aus einem Polymer besteht und
ii) der parallel zu der Ebene angeordnet ist und
iii) der schräg zu den wenigstens zwei Glaswellenleitern verläuft, so daß an den Stellen, an denen er die wenigstens zwei Glaswellenleiter jeweils kreuzt, Koppelbereiche in zu der Ebene senkrechten Richtung entstehen, und
c) daß Mittel (EA1...EA4; EB1...EB4) vorgesehen sind, mit denen in den Koppelbereichen die Temperatur des Wellenleiterkerns des wenigstens einen Polymerwellenleiters veränderbar ist.

2. Optischer Raumschalter nach Anspruch 1, bei der zwischen den Wellenleiterkernen der wenigstens zwei Glaswellenleiter und dem Wellenleiterkern des wenigstens einen Polymerwellenleiters eine Polymerschicht (MSP) ist.

3. Optischer Raumschalter nach einem der vorhergehenden Ansprüche, bei dem die Mittel, mit denen in den Koppelbereichen die Temperatur des wenigstens einen Polymerwellenleiters veränderbar ist, Heizelektroden sind.

4. Optischer Raumschalter nach einem der vorhergehenden Ansprüche, bei der Mittel zur Temperaturregelung der gesamten optischen Raumschalter vorgesehen sind.

5. Optischer Raumschalter nach einem der vorhergehenden Ansprüche, bei der in den Koppelbereichen der wenigstens eine Polymerwellenleiter so die wenigstens zwei Glaswellenleitern kreuzt, daß mit diesen ein Winkel (a) zwischen 0.2° und 1.2° eingeschlossen wird.

6. Optischer Raumschalter nach einem der vorhergehenden Ansprüche, bei der in den Koppelbereichen die wenigstens zwei Glaswellenleiter und der wenigstens eine Polymerwellenleiter gerade sind.

7. Optischer Raumschalter nach einem der vorhergehenden Ansprüche, bei der der wenigstens eine Polymerwellenleiter (PWLA in Fig. 10) zwischen den Koppelbereichen s-förmig gekrümmt ist.
